# EUROPÄISCHE PATENTSCHRIFT

(11) **EP 1 991 841 B1**
(45) Veröffentlichungstag und Bekanntmachung des Hinweises auf die Patenterteilung: **02.12.2015**
(21) Anmeldenummer: 07710503.9
(22) Anmeldetag: 06.03.2007
(51) Int. Cl.: G01F 23/24

(54) **FÜLLSTANDSSENSOR FÜR KRYOGENE FLÜSSIGKEITEN UND BEHÄLTER MIT EINEM SOLCHEN**
LEVEL SENSOR FOR CRYOGENIC LIQUIDS, AND RECEPTACLE COMPRISING SUCH A LEVEL SENSOR
DÉTECTEUR DE NIVEAU POUR LIQUIDES CRYOGÉNIQUES, ET RÉSERVOIR ÉQUIPÉ D'UN TEL DÉTECTEUR

(30) Priorität: 06.03.2006 AT 1642006
(43) Veröffentlichungstag der Anmeldung: 19.11.2008
(73) Patentinhaber: Magna Steyr Fahrzeugtechnik AG & Co. KG, 8041 Graz (AT)
(72) Erfinder: KRAMMER, Gert, A-8042 Graz (AT)
(74) Vertreter: Zangger, Bernd
(86) Internationale Anmeldenummer: PCT/AT2007/000113
(87) Internationale Veröffentlichungsnummer: WO 2007/101286

(56) Entgegenhaltungen:
- EP-A- 1 424 882
- WO-A-91/08449
- CH-A5- 675 912
- US-A- 5 908 985

## Beschreibung

Die Erfindung betrifft einen Füllstandsdetektor für in einem Behälter befindliche kryogene Flüssigkeiten, welcher aus einer in die Flüssigkeit eintauchenden Sonde und einem Elektronikteil besteht, wobei sich über die Länge der Sonde eine supraleitende Leitungsstrecke und eine Heizvorrichtung erstreckt, und wobei der Spannungsabfall in der Leitungsstrecke als Maß für den Flüssigkeitsstand gemessen wird.

Bei dem Behälter ist nicht nur, aber insbesondere, an einen von einem Kraftfahrzeug mitgeführten Behälter für verflüssigte tiefsiedende Gase - zum Beispiel Wasserstoff - gedacht, der als Kraftstoff dient. Verflüssigte tiefsiedende Gase werden unter Bedingungen (Druck und Temperatur) gespeichert, bei denen sich die Zustandsgrößen der flüssigen Phase und der gasförmigen Phase nur wenig unterscheiden. Das erschwert eine genaue Messung mit konventionellen Methoden.

Für den Einsatz in einem Kraftfahrzeug ist aus Sicherheitsgründen und zur vollen Nutzung der Reichweite einer Behälterfüllung aber eine genaue Ermittlung der noch vorhandenen Treibstoffmenge erforderlich. Auch eine Überwachung der Temperatur des Behälterinhaltes ist erwünscht. Dazu kommen gewisse für den Fahrbetrieb typische Erschwernisse; etwa, dass die Lage des Flüssigkeitsspiegels von der Neigung des Fahrzeuges und von Fliehkräften beeinflusst wird.

Ein gattungsgemäßer Füllstandsdetektor ist aus der WO 91/08449 bekannt. Dort ist die Sonde ein steifer Stab, der aus einem rohrförmigen mechanischen Träger, einer gegenüber diesem durch ein Substrat getrennten ganzflächigen supraleitenden Schicht und einem im Inneren des Rohres angeordneten Widerstands - Heizelement, welches durch einen elektrischen Isolator an der Innenwand des Rohres abgestützt ist. Das Heizelement stellt sicher, dass die geeignet gewählte supraleitende Schicht im Bereich der kalten Flüssigkeitsdämpfe gerade nicht supraleitend wird, wohl aber in dem in die Flüssigkeit eintauchenden Bereich. Elektrische Anschlüsse für die Widerstandsmessung sind, so zu sehen, von aussen an die supraleitende Schicht herangeführt.

Nachteilig ist an dieser Sonde der erhebliche Bauaufwand und die exponierte Lage der elektrischen Anschlüsse und Leiter. Es ist somit Aufgabe der Erfindung, einen unempfindlichen und kostengünstigen Füllstandsdetektor zu schaffen, der für die Massenfertigung geeignet und für verschieden große und verschieden geformte Behälter einsetzbar ist.

Erfindungsgemäß wird das dadurch erreicht, dass die Sonde ein Flachleiter ist, der aus mehreren parallel in einer Kunststoffhülle geführten Leitern besteht, wovon ein erster Leiter ein Supraleiter mit geeignet gewählter Sprungtemperatur ist, Paare zweiter Leiter der Zufuhr von Heizstrom zu dem ersten Leiter, und Paare dritter Leiter der Spannungsmessung dienen, wobei die Leiter eines Paares jeweils an voneinander in Längsrichtung der Sonde entfernten Punkten an diese angeschlossen sind.

Flachleiter sind an sich bekannt (EP Patent der FirmaI & T Innovation Technology AG). Sie bestehen aus in einer Ebene nebeneinander liegenden leitenden Folienstreifen, die voneinander isoliert mit einer Matrix, in der Regel einem isolierenden Kunststoff, umspritzt sind. Flachleiter sind ein billiges Massenprodukt, das in beliebiger Länge "von der Rolle" abgeschnitten und an beliebigen Stellen mit Anschlüssen, Abschlüssen und Öffnungen versehen werden kann, wozu einfache und schnelle Methoden und Vorrichtungen bekannt sind. In der tiefkalten Umgebung und im Zusammenwirken mit der erfindungsgemäßen Disposition und Aufgabenverteilung der einzelnen Leiter zeigen sich noch weitere Vorteile dieser Technik. Zudem können Flachleiter in verschiedener Konstellation hinsichtlich Anzahl und Beschaffenheit der Leiter und Querschnitt der Matrix hergestellt werden.

So besteht als ein Aspekt der Erfindung der erste Leiter im Flachleiter aus einem geeigneten supraleitenden Werkstoff und der Querschnitt der Matrix kann so gewählt sein, dass diese biegsam ist und auch eine bestimmte Steifigkeit hat. Weiters können die Anschlüsse für die Paare zweiter Leiter zur Zufuhr von Heizstrom an den Supraleiter an voneinander in vertikaler Richtung entfernten Punkte vorgenommen werden. So ist der Supraleiter gleichzeitig sein eigener Heizleiter. Der Bereich zwischen einem Paar zweiter Leiter umfasst die möglichen Lagen des Flüssigkeitsspiegels. Auf die Länge des Flachleiters können mehrere solche Bereiche ausgebildet sein. Dann sind auch mehrere Paare zweiter und dritter Leiter im Flachleiter enthalten.

Um eine möglichst geringe Aufheizung der Flüssigkeit (die zu erhöhtem Abdampfen führt) und ein schnelles Ansprechen des Supraleiters auf Spiegeländerungen zu erreichen, ist die Kunststoffhülle des Flachleiters ein schlechter Wärmeleiter und weist nur in der Umgebung des ersten Leiters (des Supraleiters) stellenweise Freistellungen (Unterbrechungen) auf, sodass der erste Leiter an diesen Stellen mit der Flüssigkeit in Berührung treten kann (Anspruch 2).

Wenn zusätzlich zur Füllstandsmessung auch eine Temperaturmessung vorzusehen ist, enthält der Flachleiter weitere Leiter für die Temperaturmessung (Anspruch 3). Ein so verbreiterter Flachleiter erfordert, wie oben erläutert, nur minimalen Mehraufwand. Mit ähnlich geringem Mehraufwand kann auch die Kunststoffhülle des Flachleiters in dessen Längsrichtung verlaufende Versteifungsrippen ausweisen (Anspruch 4), zur Einstellung einer bestimmten Steifigkeit und gegebenenfalls auch als Abstandhalter. Zu den Vorteilen eines Flachleiters zählt auch, dass er an seinem freien Ende mit einem einfachen Arbeitsgang isolierend abgeschlossen werden kann (Anspruch 5).

In Weiterbildung der Erfindung ist die Sonde an einer zumindest stellenweise im Inneren des Behälters befestigten Führung geführt (Anspruch 6). So wird der Flachleiter auch bei Erschütterungen des Fahrzeuges an seinem Platz gehalten. Die Führung braucht bei geeignet gewählter Steifigkeit des Flachleiters keiner Geraden zu folgen.

Vorzugsweise ist die Führung ein Rohr, dessen Inneres die Sonde enthält und mit dem Inhalt des Behälters ein kommunizierendes Gefäß bildet (Anspruch 7). Die Kommunikation wird durch Öffnungen des Rohres an bestimmten Stellen hergestellt und bewirkt, dass die Lage des Flüssigkeitsspiegels im Behälter auch die im Rohr ist. So können Schwankungen des Flüssigkeitsspiegels gedämpft werden. Was der Genauigkeit der Messung zugute kommt.

In einer vorteilhaften Ausfuhrungsform durchstoßt das Rohr mit einem Endbereich die Behälterwand, ist mit ihr dicht verbunden (zum Beispiel verschweisst) und enthält eine lösbare Durchführung für den dem Elektronikteil zugewandte Endbereich der im Rohr befindlichen Sonde (Anspruch 8). So ist die Dichtheit des Behälters, der in der Regel aus einem Innen- und einem Aussenbehälter mit einem evakuierten Zwischenraum besteht, auch an der Verbindungsstelle der Sonde mit dem ausserhalb des Behälters angeordneten Elektronikteil gegeben. Weil die Durchführung lösbar ist, kann die Sonde ausgewechselt werden.

Die Erfindung bietet die für den Einsatz in einem Kraftfahrzeug besonders vorteilhafte Möglichkeit, den Füllstand an zwei voneinander in horizontaler Richtung entfernten Stellen des Behälters mit einer einzigen erfindungsgemäßen Sonde zu messen. Dazu durchstößt die Führung mit der Sonde im Inneren des Behälters an mindestens zwei Stellen den Flüssigkeitsspiegel und der Supraleiter bildet so mindestens zwei Messstrecken.

Im folgenden wird die Erfindung anhand von Abbildungen beschrieben und erläutert. Es stellen dar:
- Fig. 1: Einen Längsschnitt durch einen Behälter mit der erfindungsgemäßen Sonde,
- Fig. 2: Detail II in Fig. 1, die Sonde,
- Fig. 3: einen Schnitt nach III-III in Fig. 2,
- Fig. 4: schematisch die elektrischen Verbindungen der Leiter.

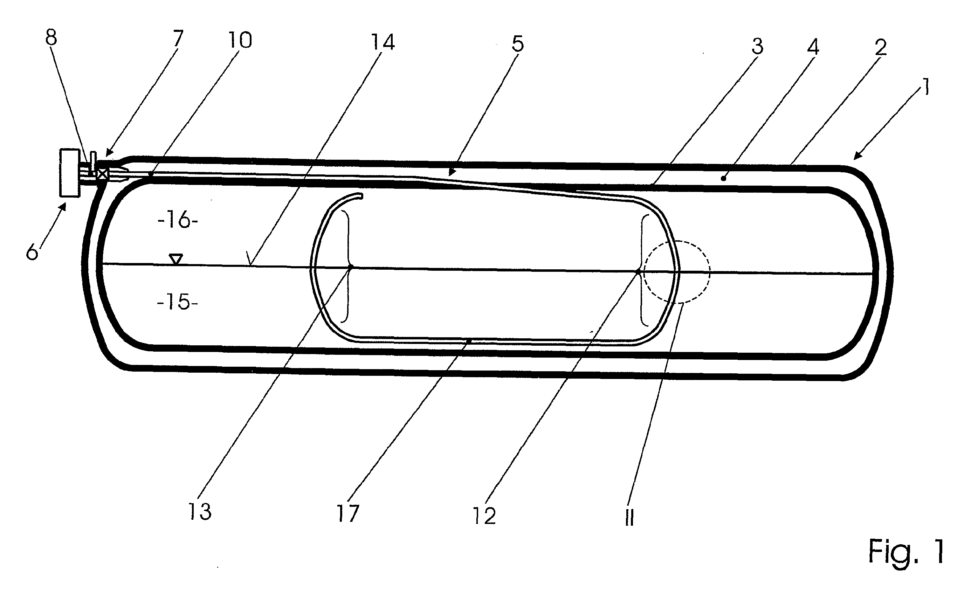

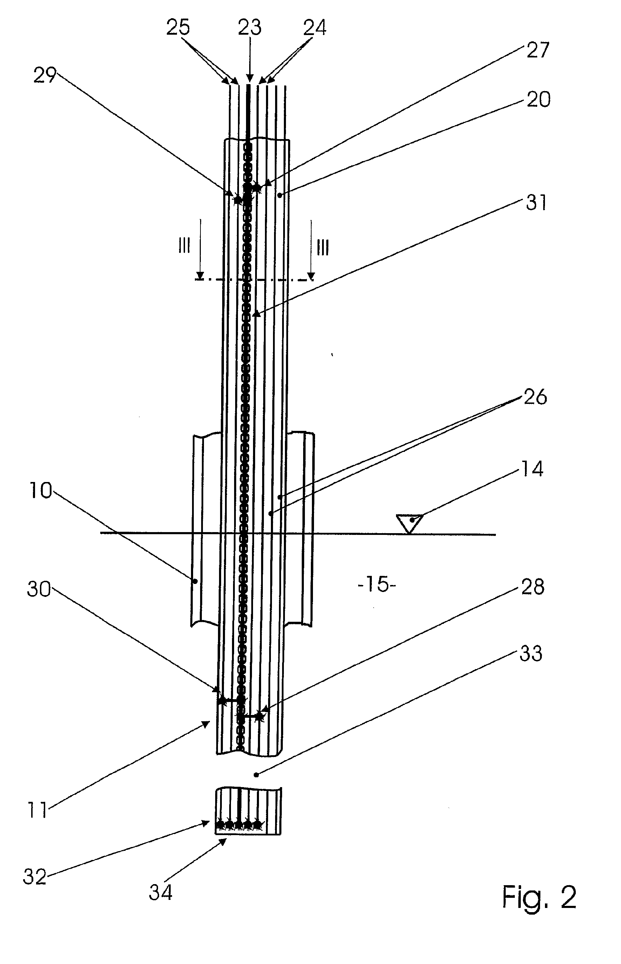

In Fig.1 ist ein Behälter für eine kryogene Flüssigkeit (hier: Wasserstoff) summarisch mit 1 bezeichnet. Er besteht aus einem Außenbehälter 2 und einem Innenbehälter 3, zwischen denen ein evakuierter und wärmeisolierender Zwischenraum besteht. Ein Füllstandsdetektor ist allgemein mit 5 bezeichnet, sein Elektronikteil 6 befindet sich außerhalb des Behälters 1 und ist mit einem Flansch 7 und einer als Rohr ausgebildeten Führung 10 verbunden, welche über eine Durchführung 8 ins Innere des Behälters reicht. In Fig.1 ist nur das Rohr 10 zu sehen, die in ihm geführte Sonde 11 ist erst in Fig.2 zu sehen. Das Rohr 10 reicht von oben in den Innenbehälter 3, erstreckt sich dann abwärts über eine erste Messregion 12 und weiter über die Strecke 17 zu einer in horizontaler Richtung von ihr beabstandeten zweiten Messregion 13. In dieser erstreckt es sich aufwärts bis zu seinem offenen Ende. Der Flüssigkeitsspiegel in dem Behälter 1 ist mit 14 bezeichnet, unter ihm ist die Flüssigkeit, über ihm der Gasraum 16. Die flüssige Phase 15 und die gasförmige Phase 16 sind miteinander im Gleichgewicht.

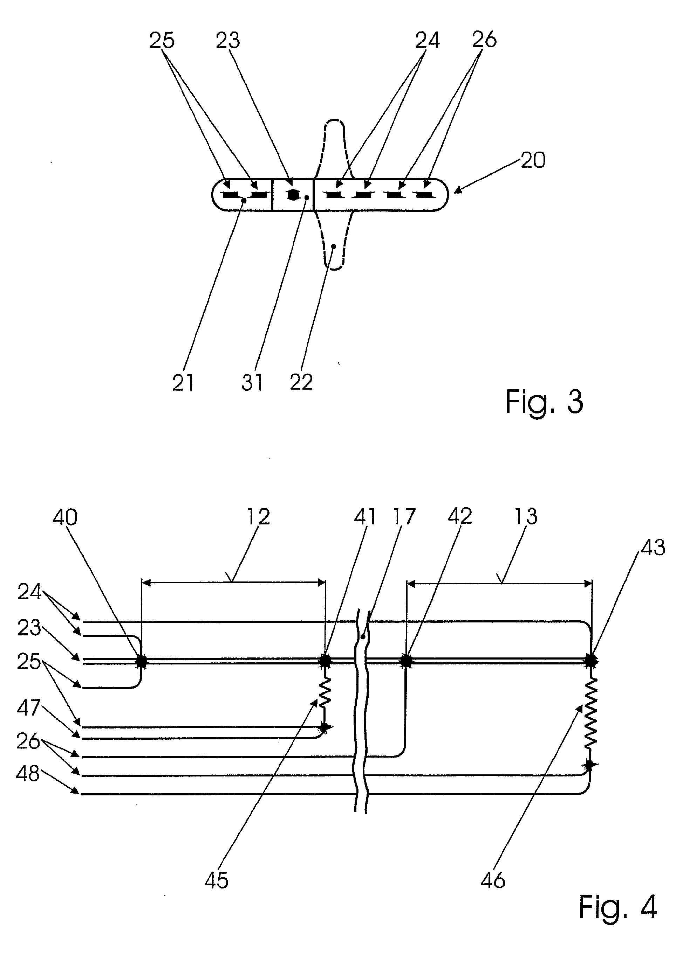

In **Fig. 2** und **Fig. 3** ist vergrößert ein Teil des Rohres 10 und ein Teil der von diesem aufgenommenen Sonde 11. Die Sonde 11 ist als Flachleiter 20 ausgebildet, der aus einer Kunststoffmatrix 21 und den in die Matrix eingebetteten Leitern besteht. Die Kunststoffmatrix 21 kann zur Versteifung beziehungsweise Führung des Flachleiters 20 Versteifungsrippen 22 (strichliert) aufweisen. Die Leiter selbst sind flach und durch umspritzen in die Matrix eingebettet. Ein erster Leiter 23 besteht aus einem supraleitenden Werkstoff dessen Sprungtemperatur zu flüssigen Wasserstoff passt, zum Beispiel Magnesiumdiborid (MgB₂). Ein Paar zweiter Leiter 24 dient der Zufuhr von Heizstrom zu dem Supraleiter 23, ein Paar dritter Leiter 25 dient der Spannungsmessung, genauer: Der Messung des durch den Widerstand des ersten Leiters 23 verursachten Spannungsabfalls. Im gezeigten Ausführungsbeispiel ist noch ein weiteres Paar zweiter Leiter 26 vorgesehen, weil mit der Sonde 11 der Füllstand in zwei voneinander entfernten Messregionen 12, 13 gemessen werden soll.

Es ist einer der Vorteile von Flachleitern, dass es einfache Arbeitsweisen und Vorrichtungen zur Verbindung und zum Abklemmen einzelner Leiter gibt (Siehe zum Beispiel die US 6,936,788 oder die EP 1084912 B1). So sind die zweiten Leiter 24 an zwei voneinander entfernten Stellen mit dem ersten Leiter 23 verbunden, wobei die Verbindungen in Längsrichtung des Flachleiters 20 eine Entfernung haben, die der Höhe der ersten Messregion 12 angenähert entspricht. Die Verbindungen sind mit 27 und 28 bezeichnet. An den zweiten Verbindungen 29, 30 sind die dritten Leiter 25 (einer bei Verbindung 29, einer bei Verbindung 30) mit dem ersten Leiter 23 verbunden. Für die zweite Messregion 13 ist ein weiteres Paar dritter Leiter 26 vorgesehen.

Zur Verbesserung und Beschleunigung des Wärmeüberganges auf den ersten Leiter 23 weist die Matrix 21 des Flachleiters 20 in regelmäßigen Abständen Freistellungen 31 auf, durch die die Flüssigkeit den Supraleiter direkt berührt. Der Flachleiter 20 erstreckt sich dann weiter (in Fig.2 nach unten, gemäß Fig.1 aber horizontal zur zweiten Messregion 13, welche in Fig.2 zur Vereinfachung der Darstellung bei 33 weggeschnitten ist. Man sieht dann nur mehr das Ende des Flachleiters 20, an dem sämtliche im Flachleiter 20 enthaltenen Leiter unterbrochen sind. Auch dafür gibt es für Flachleiter eine einfache Vorrichtung. Das freie Ende 34 bedarf keiner weiteren Isolation, soferne es nicht an einem metallischen Teil abgestützt ist.

Das als Führung dienende Rohr 10 ist an verschiedenen im einzelnen nicht gezeigten Stellen mit dem Innenraum des Behälters verbunden, so dass der Flüssigkeitsspiegel 14 sich auch im Inneren des Rohres 10 einstellt, dass Innere des Rohres somit mit dem Behälterinhalt kommunizierende Gefäße bildet. Wenn der Flachleiter biegsam ist und doch ausreichend steif, so kann er beim Einbau bzw Austausch von außen durch den Flansch 7 in das Rohr 10 mit all seinen Kurven eingeführt werden.

In Fig. 4 sind die diversen Leiter der Übersichtlichkeit halber quer zur Länge des Flachleiters 20 auseinandergezogen. Der Supraleiter 23 bildet zwischen den Verbindungspunkten 40 und 41 die erste Messregion 12 und zwischen den Verbindungspunkten 42 und 43 die zweite Messregion 13, dazwischen ist, hier herausgerissen, die in Fig. 1 horizontale Strecke 17. Die Leiter 24 für den Heizstrom kontaktieren den Supraleiter an den Punkten 40 und 43, somit ist der ganze Supraleiter 23 vom Heizstrom durchflossen. Die Leiter 25 für die Messung des Spannungsabfalles in der ersten Region 12 sind an den Punkten 40 und 41 angeschlossen, die Leiter 26 für die zweite Region 13 an den Punkten 42 und 43.

Fakultativ und zusätzlich zu den in Fig. 2 abgebildeten Leitern kann noch eine Temperaturmessung vorgesehen sein. Dazu sind Messelemente 45, 46 (zum Beispiel temperaturabhängige Widerstände) an den Punkten 41 und 43 angeschlossen. Der durch die Messelemente 45, 46 fließende Strom wird an den zusätzlichen Leitungen 47,48 gemessen. Auch ein Drucksensor könnte in ähnlicher Weise vorgesehen sein, wozu im Flachleiter noch weitere Leiter vorzusehen wären. Die Belegung und Verbindung der diversen Leiter ist hier beispielhaft beschrieben, sie kann auf vielerlei Weise modifiziert sein.

## Patentansprüche

1. Füllstandsdetektor für in einem Behälter (1) befindliche kryogene Flüssigkeiten, welcher aus einer in die Flüssigkeit eintauchenden Sonde und einem Elektronikteil (6) besteht, wobei sich über die Länge der Sonde eine supraleitende Leitungsstrecke und eine Heizvorrichtung erstreckt, und wobei der Spannungsabfall in der Leitungsstrecke als Maß für den Flüssigkeitsstand gemessen wird, **dadurch gekennzeichnet, dass** die Sonde (11) ein Flachleiter (20) ist, der aus mehreren parallel in einer Kunststoffmatrix (21) geführten Leitern besteht, wovon
- ein erster Leiter (23) ein Supraleiter mit geeignet gewählter Sprungtemperatur ist,
- mindestens ein Paar zweiter Leiter (24) der Zufuhr von Heizstrom zu dem ersten Leiter (23), und
- mindestens ein Paar dritter Leiter (25; 25,26) der Spannungsmessung dienen,
wobei die Leiter eines Paares (24,25,26) jeweils an voneinander in Längsrichtung der Sonde entfernten Punkten (27,28 und 29,30) an diese angeschlossen sind.

2. Füllstandsdetektor nach Anspruch 1, **dadurch gekennzeichnet, dass** die Kunststoffmatrix (21) des Flachleiters (20) ein schlechter Wärmeleiter ist und nur in der Umgebung des ersten Leiters (23) stellenweise Freistellungen (31) aufweist, sodass der erste Leiter (23) an diesen Stellen mit der Flüssigkeit (15) in Berührung treten kann.

3. Füllstandsdetektor nach Anspruch 1, **dadurch gekennzeichnet, dass** der Flachleiter (20) weitere Leiter für die Temperaturmessung enthält.

4. Füllstandsdetektor nach Anspruch 1, **dadurch gekennzeichnet, dass** die Kunststoffmatrix (21) des Flachleiters in dessen Längsrichtung verlaufende Versteifungsrippen (22) hat.

5. Füllstandsdetektor nach Anspruch 1, **dadurch gekennzeichnet, dass** das freie Ende (34) des Flachleiters (20) eine Isolation (32) aufweist.

6. Füllstandsdetektor nach Anspruch 1, **dadurch gekennzeichnet, dass** die Sonde (11) an einer zumindest stellenweise im Inneren des Behälters (1; 2; 3) befestigten Führung (10) geführt ist.

7. Füllstandsdetektor nach Anspruch 6, **dadurch gekennzeichnet, dass** die Führung (10) ein Rohr ist, dessen Inneres die Sonde (11) enthält und mit dem Inhalt (15) des Behälters ein kommunizierendes Gefäß bildet.

8. Füllstandsdetektor nach Anspruch 7, **dadurch gekennzeichnet, dass** das Rohr (10) die Behälterwand (2,3) durchstößt, mit ihr dicht verbunden ist und eine lösbare Durchführung (8) für den dem Elektronikteil (6) zugewandten Endbereich der im Rohr (10) befindlichen Sonde (11) enthält.

9. Füllstandsdetektor nach Anspruch 6, **dadurch gekennzeichnet, dass** die Führung (10) im Inneren des Behälters an mindestens zwei Stellen (12,13) den Flüssigkeitsspiegel (14) durchstößt und der Supraleiter (23) somit mindestens zwei Messstrecken bildet.

## Claims

1. Filling level detector for cryogenic liquids which are located in a receptacle (1), which filling level detector comprises a probe, which is immersed in the liquid, and an electronics part (6), with a superconducting line section and a heating apparatus extending over the length of the probe, and with the voltage drop in the line section being measured as a measure of the liquid level, **characterized in that** the probe (11) is a flat conductor (20) which comprises a plurality of conductors which are routed parallel in a plastic matrix (21), of which
- a first conductor (23) is a superconductor with a suitable selected critical temperature,
- at least one pair of second conductors (24) are used to supply heating current to the first conductor (23), and
- at least one pair of third conductors (25; 25, 26) are used for voltage measurement,
with the conductors in one pair (24, 25, 26) each being connected to points (27, 28 and 29, 30) which are at a distance from one another in the longitudinal direction of the probe.

2. Filling level detector according to Claim 1, **characterized in that** the plastic matrix (21) of the flat conductor (20) is a poor heat conductor and has cutouts (31) only in places in the vicinity of the first conductor (23), such that the first conductor (23) can make contact with the liquid (15) at these points.

3. Filling level detector according to Claim 1, **characterized in that** the flat conductor (20) contains further conductors for temperature measurement.

4. Filling level detector according to Claim 1, **characterized in that** the plastic matrix (21) of the flat conductor has stiffening ribs (22) which run in its longitudinal direction.

5. Filling level detector according to Claim 1, **characterized in that** the free end (34) of the flat conductor (20) has insulation (32).

6. Filling level detector according to Claim 1, **characterized in that** the probe (11) is guided on a guide (10) which is mounted in the interior of the receptacle (1; 2; 3), at least in places.

7. Filling level detector according to Claim 6, **characterized in that** the guide (10) is a tube whose interior contains the probe and forms a communicating vessel with the content (15) of the receptacle.

8. Filling level detector according to Claim 7, **characterized in that** the tube (10) passes through the receptacle wall (2, 3), is connected to it in a sealed manner and contains a detachable bushing (8) for the end area, facing the electronics part (6), of the probe (11) which is located in the tube (10).

9. Filling level detector according to Claim 6, **characterized in that** the guide (10) passes through the liquid level (14) at at least two points (12, 13) in the interior of the receptacle, and the superconductor (23) therefore forms at least two measurement sections.

## Revendications

1. Détecteur de niveau pour des liquides cryogéniques se trouvant dans un récipient (1), qui se compose d'une sonde plongeant dans le liquide et d'une partie électronique (6), dans lequel une portion de conduite supraconductrice et un dispositif de chauffage s'étendent sur la longueur de la sonde, et dans lequel on mesure la chute de tension dans la portion de conduite comme mesure du niveau du liquide, **caractérisé en ce que** la sonde (11) est un conducteur plat (20), qui se compose de plusieurs conducteurs menés en parallèle dans une matrice de matière plastique (21), dont
- un premier conducteur (23) est un supraconducteur avec une température de transition choisie de manière appropriée,
- au moins une paire de deuxièmes conducteurs (24) assurent l'arrivée de courant de chauffage au premier conducteur (23), et
- au moins une paire de troisième conducteurs (25; 25, 26) est utilisée pour la mesure de la tension,
dans lequel les conducteurs d'une paire (24, 25, 26) sont raccordés à la sonde respectivement en des points (27, 28 et 29, 30) espacés l'un de l'autre dans la direction longitudinale de celle-ci.

2. Détecteur de niveau selon la revendication 1, **caractérisé en ce que** la matrice de matière plastique (21) du conducteur plat (20) est un mauvais conducteur thermique et ne présente ponctuellement des zones libres (31) que dans les environs du premier conducteur (23), de telle manière que le premier conducteur (23) puisse à ces endroits entrer en contact avec le liquide (15) .

3. Détecteur de niveau selon la revendication 1, **caractérisé en ce que** le conducteur plat (20) contient d'autres conducteurs pour la mesure de la température.

4. Détecteur de niveau selon la revendication 1, **caractérisé en ce que** la matrice de matière plastique (21) du conducteur plat (20) comporte des nervures de raidissement (22) orientées dans sa direction longitudinale.

5. Détecteur de niveau selon la revendication 1, **caractérisé en ce que** l'extrémité libre (34) du conducteur plat (20) présente un isolant (32).

6. Détecteur de niveau selon la revendication 1, **caractérisé en ce que** la sonde (11) est guidée sur un guide (10) fixé au moins localement à l'intérieur du récipient (1; 2; 3).

7. Détecteur de niveau selon la revendication 6, **caractérisé en ce que** le guide (10) est un tube, dont l'intérieur contient la sonde (11) et forme avec le contenu du récipient (15) un vase communicant.

8. Détecteur de niveau selon la revendication 7, **caractérisé en ce que** le tube (10) traverse la paroi du récipient (2, 3), est assemblé de façon étanche à celle-ci et comporte une traversée amovible (8) pour la région d'extrémité de la sonde (11) se trouvant dans le tube (10) qui est tournée vers la partie électronique (6) .

9. Détecteur de niveau selon la revendication 6, **caractérisé en ce que** le guide (10) traverse le ménisque de liquide (14) en au moins deux endroits (12, 13) à l'intérieur du récipient et le supraconducteur (23) forme ainsi au moins deux sections de mesure.
